# EUROPÄISCHE PATENTANMELDUNG

(11) **EP 3 786 583 A2**
(43) Veröffentlichungstag der Anmeldung: **03.03.2021**
(21) Anmeldenummer: 20177157.3
(22) Anmeldetag: 28.05.2020
(51) Int. Cl.: G01C 21/00

(54) **VERFAHREN ZUM BEREITSTELLEN EINER DIGITALEN STRASSENKARTE**

(30) Priorität: 28.06.2019 DE 102019209535
(71) Anmelder: Robert Bosch GmbH, 70442 Stuttgart (DE)
(72) Erfinder: Ziegenbein, Dirk, 71691 Freiberg Am Neckar (DE); Schalm, Nadja, 71272 Renningen (DE); Rittel, Michael, 71706 Markgroeningen (DE); Herrmann, Martin, 70825 Korntal (DE); Butz, Martin, 71711 Steinheim An Der Murr (DE); Heinzemann, Christian, 71640 Ludwigsburg (DE)

(57) **Zusammenfassung**

Vorgestellt wird ein computerimplementiertes Verfahren zum Bereitstellen einer digitalen Straßenkarte für den Test eines zumindest teilautomatisierten Fahrzeugsystems mit den Schritten:
- Zugriff auf eine Datenbank, in welcher zu einer Vielzahl von Straßeneigenschaften zulässige Ausprägungen der Straßeneigenschaften gespeichert sind,
- Erstellen mindestens eines Straßenkartenausschnitts, indem für den Straßenkartenausschnitt zu ersten der Vielzahl von Straßeneigenschaften jeweils eine der möglichen Ausprägungen aus der Datenbank automatisiert ausgewählt wird,
- Bereitstellung der digitalen Straßenkarte, wobei die digitale Straßenkarte den mindestens einen Straßenkartenausschnitt aufweist.

## Beschreibung

Die Erfindung betrifft computerimplementierte Verfahren zum Bereitstellen einer digitalen Straßenkarte, insbesondere für den Test eines zumindest teilautomatisierten Fahrzeugsystems.

### Stand der Technik

Automatisierte Fahrzeugsysteme müssen für viele unterschiedliche Situationen ausgelegt werden. Die Sicherheit solcher Systeme stellt eine große technische Herausforderung dar. Die entsprechenden Tests auf Sicherheitsanforderungen sind durch den unendlich großen Raum möglicher Fahrsituationen extrem aufwendig und durch Realtests alleine kaum darstellbar. Eine geeignete Unterstützung der Tests durch Simulationen ist wünschenswert. Bei solchen Simulationen ist eine besondere Herausforderung, eine möglichst breite und bestenfalls auch quantifizierbare Abdeckung der zu möglichen Situationen sicherzustellen.

Straßenkarten für simulative Tests von Fahrzeugsystemen werden vorrangig durch Vermessung realer Straßen mit hochgenauer Sensorik und anschließender manueller digitaler Nachbearbeitung der Messdaten erstellt. Eine weitere verbreitete Möglichkeit zur Erstellung solcher Straßenkarten sind Editoren, mit denen Karten manuell definiert werden können. Des Weiteren gibt es Kachel-basierte Straßeneditoren, bei denen vorgefertigte Straßenelemente auf quadratischen Kacheln oder Hexagon-Kacheln bereitgestellt werden, welche manuell aneinandergelegt werden können.

Ein mögliches Kartenformat für die Simulation ist OpenDRIVE, welches von vielen gängigen Simulationsumgebungen unterstützt wird. Straßenkarten können hier auch direkt manuell mit einem Texteditor als XML spezifiziert werden.

In der US 20170316127 A1 wird ein Verfahren zur Erstellung eines Testszenarios für ein fahrerloses Fahrzeug beschrieben. Dabei wird in einer Ausführungsform für die Umgebungssimulation das Dateiformat OpenDRIVE verwendet, welches eine logische Beschreibung von Straßennetzwerken ermöglicht.

### Offenbarung der Erfindung

Vorgestellt wird ein computerimplementiertes Verfahren zum Bereitstellen einer digitalen Straßenkarte, insbesondere für den Test eines zumindest teilautomatisierten Fahrzeugsystems. Dabei erfolgt ein Zugriff auf eine Datenbank, in welcher zu einer Vielzahl von Straßeneigenschaften zulässige Ausprägungen der Straßeneigenschaften gespeichert sind. Mindestens ein Straßenkartenausschnitt wird erstellt, indem für den Straßenkartenausschnitt zu ersten der Vielzahl von Straßeneigenschaften jeweils eine der möglichen Ausprägungen aus der Datenbank automatisiert ausgewählt wird. Schließlich wird die mindestens eine digitale Straßenkarte bereitgestellt, wobei die digitale Straßenkarte den mindestens einen Straßenkartenausschnitt aufweist.

Durch das beschriebene Verfahren kann eine digitale Straßenkarte oder eine Mehrzahl von digitalen Straßenkarten automatisch berechnet, erzeugt und bereitgestellt werden, der Aufwand wird im Vergleich zur manuellen Erstellung in Karteneditoren stark reduziert. Zudem werden auch teilweise Vorkonfigurationen oder die Berücksichtigung von Randbedingungen oder Begrenzungen ermöglicht. Die automatische Variation von Parametern ermöglicht es, eine große Anzahl unterschiedlicher Karten und vorgegebenen Randbedingungen automatisch erzeugen zu lassen. Die Erzeugung auf Basis der Datenbank mit relevanten Straßeneigenschaften und alternativen, zulässigen Ausprägungen der Straßeneigenschaften ermöglicht es, eine möglichst große und gegebenenfalls auch quantifizierbare Abdeckung des gesamten Parameterraums zu erreichen bzw. ein bestimmten Abdeckungsmaß zu gewährleisten. Der Ansatz ist beliebig parallelisierbar und erlaubt deutliche Aufwandsreduktion durch automatische computer-implementierte Erzeugung.

Das beschriebene Verfahren erlaubt dabei die automatisierte Generierung von 2D- oder 3D-Karten mit beispielsweise frei bestimmten und insbesondere auch automatische variierten Werten aus Parameterbereichen für die Ausprägungen von Straßeneigenschaften, z.B. beliebiger Kurvenradien, Steigungen, Straßenarten, Spurenanzahl etc., was deutlich über die Möglichkeiten z.B. gängiger kachelbasierten Verfahren hinausgeht. Die Automatisierung kann hierzu insbesondere auf zufällige Auswahl von diskreten Alternativen für Ausprägungen bzw. zufällige Auswahl aus kontinuierlichen Parameterbereichen für Ausprägungen zurückgreifen.

Das Verfahren trägt bereits durch die Struktur der Daten in der Datenbank zur Komplexitätsreduktion des großen Parameterraums bei. Durch optionale Teilkonfigurationen oder konfigurierte Begrenzung von Ausprägungen kann eine Bereitstellung maßgeschneiderter digitaler Straßenkarten erfolgen, zudem wird hierdurch die Variantenvielzahl weiter reduziert. Durch die weitere optionale Einführung von Äquivalenzklassen, anhand derer auch ein Abdeckungsmaß bestimmt werden kann, wird die Komplexität weiter reduziert und ein systematisches Bereitstellen von Karten ermöglicht, welche den möglichen Raum an Karten innerhalb der vorbestimmten Randbedingungen möglichst gut abdecken.

In vorteilhaften Ausgestaltungen wird eine Mehrzahl von Straßenkartenausschnitten erstellt, welche zu einer digitalen Karte zusammengefügt werden. Das ermöglicht ein besonders flexibles und modulares Verfahren. Kompatibilität der zusammengefügten Ausschnitte sowie passende Übergänge zwischen diesen werden automatisiert sichergestellt.

Vorteilhafterweise werden bereits bei Berechnung und Erzeugung der digitalen Karten nichtzulässige Kombinationen von Ausprägungen von Eigenschaften ausgeschlossen. Optimaler Weise erfolgt zudem vor Bereitstellung noch ein Konsistenzcheck der erzeugten Karte. Somit ermöglicht das Verfahren trotz des hohen Automatisierungsgrads einen qualitativ hochwertigen Output.

In besonders bevorzugten Ausgestaltungen werden die beschriebenen Verfahren derart eingesetzt, dass die mindestens eine bereitgestellte Karte zum Testen eines zumindest teilautomatisierten Fahrzeugsystems eingesetzt wird. In einem simulativen Test wird dabei das Fahrzeugsystem bei einer Fahrt entlang einer Route auf einer wie beschrieben bereitgestellten digitalen Straßenkarte daraufhin überprüft, ob mindestens eine vorbestimmte Anforderung, insbesondere Sicherheitsanforderung, an das Fahrzeugsystem bei der simulierten Fahrt eingehalten wird.

Durch die genannten Vorteile der Kartenbereitstellung wie z.B. der breiten und gegebenenfalls auch gewährleisteten Abdeckung kann somit ein vollautomatisiertes Testverfahren für Fahrsysteme erfolgen.

Die beschriebenen Verfahren sind computerimplementiert. Eine Recheneinheit eines Computers arbeitet hierzu ein Computerprogramm ab, welches auf einem maschinenlesbaren Datenträger abgelegt ist und dazu eingerichtet ist, die beschriebenen Verfahren durchzuführen.

Nachfolgend werden Ausführungsformen der Erfindung unter Bezugnahme auf die beiliegenden Zeichnungen näher erläutert. In den Zeichnungen zeigen:
- Fig. 1: schematisch den beispielhaften Ablauf eines computer-implementierten Verfahrens zum Bereitstellen einer digitalen Straßenkarte,
- Fig. 2: schematisch eine beispielhafte Bereitstellung mehrerer digitaler Straßenkarten bei Teilkonfiguration einer Datenbank mit Straßeneigenschaften,
- Fig. 3: schematisch eine weitere beispielhafte Bereitstellung mehrerer digitaler Straßenkarten bei Teilkonfiguration einer Datenbank mit Straßeneigenschaften.

### Beschreibung der Ausführungsbeispiele

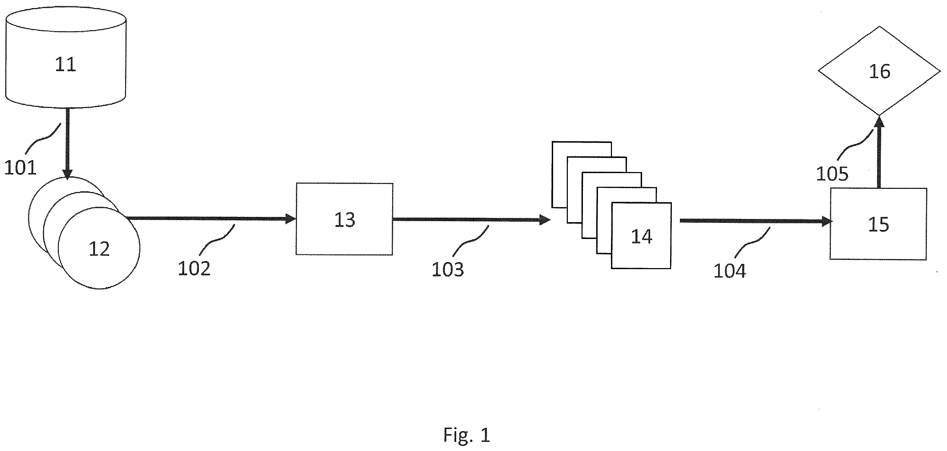

Figur 1 zeigt schematisch den beispielhaften Ablauf eines computer-implementierten Verfahrens zum Bereitstellen einer digitalen Straßenkarte und deren Nutzung für den simulativen Test eines Fahrzeugsystems.

In einem ersten Schritt 101 werden aus einer Datenbank 11, in welcher zu bestimmten Straßeneigenschaften zulässige Ausprägungen der Eigenschaften gespeichert sind, zufällig ausgewählte plus gegebenenfalls vorbestimmte Ausprägungen 12 zu ausgewählten Eigenschaften gezogen.

Die Datenbank beinhaltet dabei die Zuordnung von Straßeneigenschaften und für die Straßeneigenschaften zulässige Ausprägungen, wobei die Ausprägungen derart bestimmt sind, dass sie gegenseitig exklusiv sind, das heißt, dass es zwischen den Ausprägungen keine Überlappung gibt. Die Datenbank beinhaltet insbesondere Zwicky-Boxen, morphologische Kasten oder vergleichbare Datenstrukturen zur kompositionalen Modellierung, welche die relevanten Eigenschaften des Designraums kompositional mit Dimensionen und Alternativen innerhalb der einzelnen Dimensionen beschreibt.

Zum Beispiel könnten als relevante Straßeneigenschaften in der Datenbank eine Straßenbreite, ein Straßenbelag oder eine Reibungsgröße, Straßenmarkierungen, das Bestehen bestimmter Straßeninfrastruktur wie Ampeln, Randbebauungen der Straße, Verkehrszeichen, Fußgängerüberwege, Kurvenradius der Straße, das Bestehen von Kreuzungen und Abfahrten uvm. bestimmt sein.

Passend zu einigen der beispielhaft genannten Eigenschaften könnten die folgenden beispielhaften Ausprägungen für einen Straßenkartenausschnitt in der Datenbank gespeichert sein:
- Straßenbreite: festgelegter Parameterbereich in Metern
- Fahrbahnen: 1, 2, 3, 4, 5, 6
- Ampel: nein, ja
- Fußgängerüberweg: nein, ja (Zebrastreifen), ja (Fußgängerampel)
- Randbebauung: nein, ja - niedrig (bis 1 Meter), ja - hoch (> 1 Meter)

Weiterhin sind in einer besonders bevorzugten Ausprägung in der Datenbank zudem auch Informationen darüber gespeichert, welche Kombinationen aus Ausprägungen für unterschiedliche Eigenschaften nicht sinnvoll bzw. nicht zulässig sind. Auf diese Eigenschaften kann bei der Auswahl der Ausprägungen zugegriffen werden und sie werden automatisch bei der Auswahl berücksichtigt, so dass keine digitalen Karten mit derartigen Kombinationen bereitgestellt werden.

Zumindest ein Teil der Ausprägungen zu den relevanten Eigenschaften wird automatisch ausgewählt, insbesondere über eine zufällige Auswahl, wobei auch eine Auswahl nach vorbestimmtem Algorithmus möglich ist. Eine zufällige Auswahl erfolgt insbesondere durch Verwendung eines Zufallsgenerators oder Pseudozufallsgenerators. In einer vorteilhaften Ausgestaltung ist zudem eine Teilkonfiguration von Ausprägungen für Eigenschaften möglich. Hierzu kann in dem Verfahren in einem in Fig. 1 nicht gezeigten Schritt eine Konfiguration empfangen werden und ein Teil der Ausprägungen entsprechend dieser Teilkonfiguration gewählt werden. Die übrigen Ausprägungen werden automatisch bestimmt, so dass alle relevanten Eigenschaften bzw. alle für die Bereitstellung der Karte nötigen Eigenschaften bestimmt sind.

Beispielsweise können Teilkonfigurationen derart gewählt werden, dass für den gewünschten Zweck maßgeschneiderte Kartensätze bereitgestellt werden. Soll beispielsweise eine Autobahnfunktion eines zumindest teilautomatisierten Fahrzeugs in einer Simulation unter Verwendung der bereitgestellten digitalen Karten getestet werden, so könnten die Ausprägung der Straßeneigenschaft "Spuranzahl" auf die Werte 2, 3 oder 4 beschränkt sein. Auch die Erzeugung länderspezifischer Karten ist so möglich, z.B. durch eine Beschränkung auf Ausprägungen, welche für Linksverkehr zulässig sind. Auch kann eine automatische Beschränkung von Ausprägungen auf bestimmte Parameterbereichen erfolgen. Beispielsweise kann dies auf Basis von Parametern einer Fahrzeugklasse (z.B. Auto, Lkw) erfolgen, um gezielt schwierige Karten bzw. mögliche Karten für die definierte Fahrzeugklasse zu erzeugen, insbesondere für eine Verwendung der derart bereitgestellten Straßenkarten für ein entsprechendes Fahrzeugsystem.

Die ermittelten Ausprägungen zu den relevanten Straßeneigenschaften werden in Schritt 102 einem computerimplementierten Kartengenerator 13 übermittelt, in welchem automatisch abhängig von den übermittelten Ausprägungen in einem Schritt 103 mindestens eine digitale Karte 14 erzeugt und bereitgestellt wird. Für die Berechnung, Erzeugung und Bereitstellung der mindestens einen digitalen Straßenkarte kann eine Konfiguration erfolgen, ob nur eine oder eine bestimmte Anzahl digitaler Eigenschaften unter der optional gegebenen Teilkonfiguration berechnet, erzeugt und bereitgestellt werden soll oder ob eine vorbestimmte, beispielsweise eine vollständige Abdeckung des bestehenden Parameterraums gewünscht wird.

Soll lediglich eine Straßenkarte erzeugt werden, kann insbesondere eine zufällige Auswahl der zulässigen (und nach einer möglichen Teilkonfiguration freien) Ausprägungen der Straßeneigenschaften unter Beachtung nicht zulässiger Kombinationen erfolgen und die Straßenkarte auf dieser Basis berechnet, erzeugt und bereitgestellt werden. Soll eine bestimmte Anzahl an Straßenkarten unter den gleichen Bedingungen bereitgestellt werden, werden die Schritte der Berechnung, Erzeugung und Bereitstellung entsprechend oft wiederholt.

Es kann aber in alternativen Ausgestaltungen auch eine vollständige Abdeckung des Designraums bzw. ein bestimmtes Abdeckungsmaß für diesen gewünscht sein. Hierzu können Äquivalenzklassen definiert sein, d.h. es kann definiert sein, wann zwei bereitgestellte Karten als äquivalent zu betrachten sind, d.h. nicht über ein vorbestimmtes Maß hinaus voneinander abweichen. Identische Karten sind immer als äquivalent zu betrachten. Bei nicht-identischen Karten können z.B. Parameterbereiche definiert werden, innerhalb derer zwei Karten für bestimmte Ausprägungen einer Eigenschaft als äquivalent bezüglich dieser Eigenschaft zu betrachten sind. Ein Beispiel für letzteren Fall könnten zwei Straßenkarten sein, bei welchen die Straßenbreiten nur einen geringen Unterschied aufweisen, diese also als äquivalent betrachtet werden können. Sind auch die übrigen Eigenschaften als äquivalent zu betrachten, gehören diese beide Straßenkarten zu gleichen Äquivalenzklasse. Nun kann bei der Berechnung, Erzeugung und Bereitstellung der digitalen Karten vorkonfiguriert sein, dass zumindest eine oder genau eine Karte pro Äquivalenzklasse erzeugt wird. Es kann auch ein Abdeckungsmaß definiert sein (z.B. Straßenkarten zu mindestens 50% der Äquivalenzklassen werden bereitgestellt), welches bei der Berechnung, Erzeugung und Bereitstellung zu erfüllen ist.

Bei der Auswahl der Ausprägungen 12 in Schritt 101 oder bei der Berechnung der digitalen Straßenkarte auf deren Basis in Kartengenerator 13 ist vor allem der Umgang mit Parameterbereichen bedeutend. Während diskrete Ausprägungen (wie "Ampel: ja / nein" oder "Spuren: 1, 2, 3, 4, 5, 6) direkt ausgewählt werden können, geht es bei Ausprägungen mit kontinuierlichen Parameterbereichen (z.B. Straßenbreite, Kurvenradius, Position von Verkehrszeichen oder andere Infrastruktur, Position von Kreuzungen, Steigungswert) darum, welcher exakte Wert aus einem Parameterbereich in die Berechnung eingeht. Hier kann eine zufällige Auswahl aus dem jeweiligen Parameterbereich erfolgen. Alternativ kann eine gezielte Variation von kontinuierlichen Eigenschaften erfolgen, um eine möglichst breite Abdeckung zu erreichen.

In bevorzugten Ausgestaltungen wird die mindestens eine digitale Straßenkarte mit Höheninformationen bereitgestellt. Dies kann in einer Ausgestaltung erfolgen, indem Höhen- oder Steigungswerte als Straßeneigenschaften in der Datenbank zur Verfügung stehen. Alternativ kann auch eine Anpassung bereits berechneter und erzeugter digitaler Karten vor der Bereitstellung auf ein zufälliges oder vorbestimmtes Höhenprofil erfolgen.

Bei der Berechnung und Erzeugung der digitalen Straßenkarte kann auch eine Konsistenzprüfung erfolgen, so dass die ausgewählten Parameter zu einer realistischen Karte führen.

Die Berechnung und Erzeugung der digitalen Straßenkarte umfasst in einer vorteilhaften Ausgestaltung das Erstellen eines oder mehrerer Straßenkartenausschnitte auf Basis der ausgewählten bzw. übermittelten Ausprägungen der Straßeneigenschaften. Mehrere Straßenkartenausschnitte können zu Straßenkarten zusammengesetzt werden, wobei dabei Übergänge zwischen den Straßenkartenausschnitten automatisch vervollständigt bzw. angepasst werden, so dass alle Elemente der Straßenkartenausschnitte an deren Rändern sauber aneinander anschließen (z.B. durch Einfügen von Klothoiden bei Kurven). Die Auswahl der Straßenkartenausschnitte und die Kombination von Straßenkartenausschnitten können jeweils zufällig nach vorgegebenem Schema erfolgen.

Die Bereitstellung der digitalen Straßenkarte erfolgt insbesondere durch Ausgabe in einem vorbestimmten oder konfigurierbaren maschinenlesbaren Ausgabeformat. In dem Fall einer Weiterverarbeitung der Karte(n) in einem Simulator erfolgt vorteilhafterweise eine Ausgabe in einem Datenformat, welches von der Simulationsumgebung 15 gelesen werden kann, beispielsweise im Format OpenDRIVE.

Die bereitgestellte mindestens eine digitale Karte 14 kann in einer vorteilhaften Ausgestaltung in einem Schritt 104 an eine Simulationsumgebung 15 übermittelt werden, welche ein Fahrzeugsystem in einer Simulation für eine Fahrt entlang einer Route auf der digitalen Karte 14 testet und in einem Schritt 105 ein Simulationsergebnis 16 ausgibt.

In vorteilhaften Ausgestaltungen kann das Fahrzeugsystem abhängig von den Ergebnissen der Simulation automatisch angepasst werden, falls der simulative Test Fehler oder Schwächen des Fahrzeugsystems durch Vergleich mit vorbestimmten Anforderungen an das Verhalten des Fahrzeugsystems solche festgestellt werden. Insbesondere können Softwareparameter einer Software des Fahrzeugsystems angepasst werden.

Die mit den beschriebenen Verfahren bereitgestellten digitalen Straßenkarten können automatisiert mit digitalen Straßenkarten tatsächlicher Straßen verglichen werden. Abhängig von dem Vergleich kann eine automatische Ergänzung der Straßeneigenschaften samt Ausprägungen um bislang nicht berücksichtigte Eigenschaften, Ausprägungen, Kombinationen oder Parameterbereiche erfolgen.

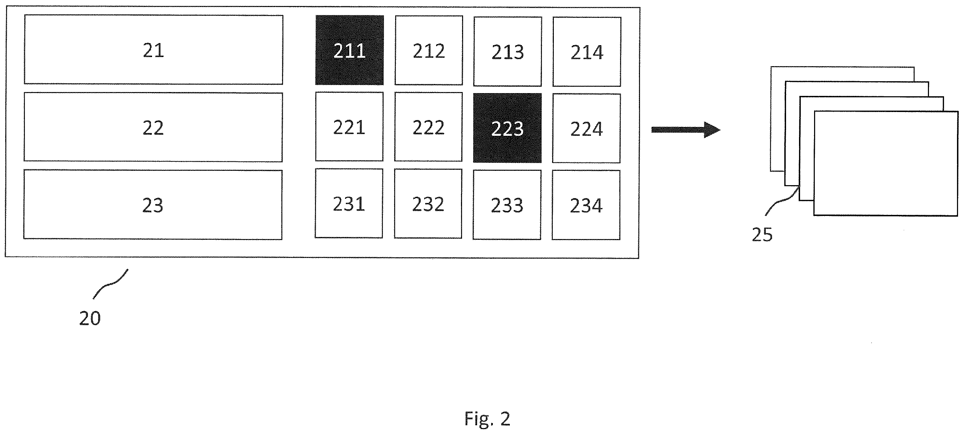

In Fig. 2 ist schematisch eine beispielhafte Datenbank 20 gezeigt. Dort sind zu den Straßeneigenschaften 21 bzw. 22 bzw. 23 die jeweiligen Ausprägungen 211 bis 214 bzw. 221 bis 224 bzw. 231 bis 234 gespeichert. Bei Vorkonfiguration der Ausprägung 211 für Eigenschaft 21 sowie der Ausprägung 223 für Eigenschaft 22 werden nur die Ausprägungen zu Eigenschaft 23 automatisch, insbesondere zufällig, ausgewählt. Bei einer Abdeckung des gesamten Raums durch eine Karte jeder Äquivalenzklasse ergeben sich in diesem Beispiel vier Karten (25).

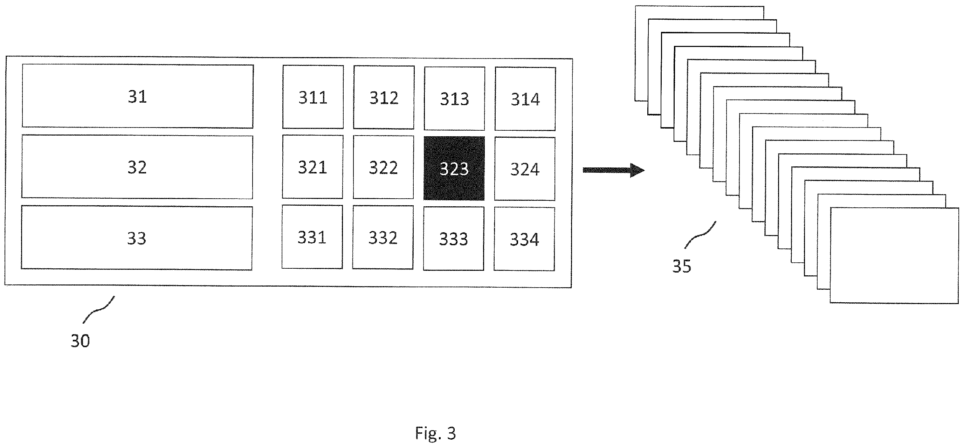

In Fig. 3 ist schematisch eine beispielhafte Datenbank 30 gezeigt. Dort sind zu den Straßeneigenschaften 31 bzw. 32 bzw. 33 die jeweiligen Ausprägungen 311 bis 314 bzw. 321 bis 324 bzw. 331 bis 334 gespeichert. Bei Vorkonfiguration der Ausprägung 323 für Eigenschaft 32 werden nur die Ausprägungen zu den Eigenschaft 31 und 33 automatisch, insbesondere zufällig, ausgewählt. Bei einer Abdeckung des gesamten Raums durch eine Karte jeder Äquivalenzklasse ergeben sich in diesem Beispiel sechzehn Karten (35).

## Patentansprüche

1. Computerimplementiertes Verfahren zum Bereitstellen einer digitalen Straßenkarte (14), insbesondere für den Test eines zumindest teilautomatisierten Fahrzeugsystems, **gekennzeichnet durch** die Schritte:
- Zugriff auf eine Datenbank (11), in welcher zu einer Vielzahl von Straßeneigenschaften zulässige Ausprägungen der Straßeneigenschaften gespeichert sind,
- Erstellen mindestens eines Straßenkartenausschnitts, indem für den Straßenkartenausschnitt zu ersten der Vielzahl von Straßeneigenschaften jeweils eine der möglichen Ausprägungen aus der Datenbank (11) automatisiert ausgewählt wird,
- Bereitstellung der digitalen Straßenkarte (14), wobei die digitale Straßenkarte den mindestens einen Straßenkartenausschnitt aufweist.

2. Verfahren nach Anspruch 1, **dadurch gekennzeichnet, dass** die Auswahl der Ausprägungen zu den ersten der Vielzahl von Straßeneigenschaften zufällig erfolgt.

3. Verfahren nach einem der vorangegangenen Ansprüche, **dadurch gekennzeichnet, dass** für das Erstellen des mindestens einen Straßenkartenausschnitts zu zweiten der Vielzahl von Straßeneigenschaften jeweils eine der möglichen Ausprägungen aus der Datenbank (11) bereits vorkonfiguriert wurde.

4. Verfahren nach einem der vorangegangenen Ansprüche, **dadurch gekennzeichnet, dass** für das Erstellen des mindestens einen Straßenkartenausschnitts zu dritten der Vielzahl von Straßeneigenschaften die jeweilige Menge oder der jeweilige Bereich an möglichen Ausprägungen in der Datenbank (11) begrenzt ist.

5. Verfahren nach Anspruch 4, **dadurch gekennzeichnet, dass** die Auswahl der Ausprägungen zu den dritten der Vielzahl von Straßeneigenschaften zufällig aus der begrenzten Menge oder dem begrenzten Bereich an möglichen Ausprägungen erfolgt.

6. Verfahren nach einem der vorangegangenen Ansprüche, **dadurch gekennzeichnet, dass** mindestens zwei Straßenkartenausschnitte erstellt werden und die bereitgestellte mindestens eine digitale Straßenkarte (14) die mindestens zwei Straßenkartenausschnitte aufweist.

7. Verfahren nach Anspruch 6, **dadurch gekennzeichnet, dass** die mindestens eine digitale Straßenkarte (14) bereitgestellt wird, indem die mindestens zwei Straßenkartenausschnitte automatisch zusammengefügt werden.

8. Verfahren nach Anspruch 7, **dadurch gekennzeichnet, dass** beim Zusammenfügen die Straßenkartenausschnitte automatisch beachtet wird, welche Straßenkartenausschnitte wie zusammenpassen.

9. Verfahren nach einem der Ansprüche 7 oder 8, **dadurch gekennzeichnet, dass** beim Zusammenfügen Übergänge zwischen den Straßenkartenausschnitten automatisch angepasst oder vervollständigt werden.

10. Verfahren nach einem der vorangegangenen Ansprüche, **dadurch gekennzeichnet, dass** die Ausprägungen der Straßeneigenschaften als diskrete Alternativen oder als alternative Wertebereiche vorliegen.

11. Verfahren nach Anspruch 10, **dadurch gekennzeichnet, dass** die Auswahl aus diskreten Alternativen einer Ausprägung durch zufällige Auswahl aus den Alternativen erfolgt.

12. Verfahren nach einem der Ansprüche 10 oder 11, **dadurch gekennzeichnet, dass** die Auswahl aus alternativen Wertebereichen durch eine, insbesondere zufällige, Auswahl eines Wertes aus dem Wertebereich erfolgt.

13. Verfahren nach einem der vorangegangenen Ansprüche, **dadurch gekennzeichnet, dass** beim Erstellen des mindestens einen Straßenkartenausschnitts nicht zulässige Kombinationen von Ausprägungen verschiedener Straßeneigenschaften bei der Auswahl automatisch ausgeschlossen werden.

14. Verfahren nach einem der vorangegangenen Ansprüche, **dadurch gekennzeichnet, dass** nach Bereitstellen der mindestens einen digitalen Straßenkarte eine automatische Konsistenzprüfung erfolgt und eine inkonsistente Karte automatisch verbessert oder verworfen oder ausgetauscht wird.

15. Verfahren nach einem der vorangegangenen Ansprüche, **dadurch gekennzeichnet, dass** die Straßeneigenschaften und deren zulässige Ausprägungen in der Datenbank als Zwicky-Boxen gespeichert sind.

16. Verfahren nach einem der vorangegangenen Ansprüche, **dadurch gekennzeichnet, dass** der mindestens eine Straßenkartenausschnitt oder die mindestens eine digitale Karte (14) vor der Bereitstellung automatisch um Höheninformationen erweitert wird, insbesondere um zufällig ausgewählte Höhenverläufe.

17. Verfahren nach einem der vorangegangenen Ansprüche, **dadurch gekennzeichnet, dass** die bereitgestellte mindestens eine digitale Straßenkarte (14) mit einem abgespeicherten digitalen Repräsentanten einer tatsächlichen Straße verglichen wird und abhängig von dem Vergleich eine Ergänzung der Datenbank (11) erfolgt.

18. Verfahren nach einem der vorangegangenen Ansprüche, **dadurch gekennzeichnet, dass** automatisiert nacheinander oder parallel mehrere digitale Straßenkarten (14) bereitgestellt werden.

19. Verfahren nach Anspruch 18, **dadurch gekennzeichnet, dass** das Verfahren abgebrochen wird, wenn eine vorbestimmte Anzahl an digitalen Straßenkarten (14) erreicht ist.

20. Verfahren nach Anspruch 18, **dadurch gekennzeichnet, dass** das Verfahren abgebrochen wird, wenn eine vorbestimmte Abdeckungsmaß erreicht ist, insbesondere, wenn mindestens eine digitale Straßenkarte (14) aus jeder Äquivalenzklasse der Straßenkarten bereitgestellt ist.

21. Verfahren zum Testen eines zumindest teilautomatisierten Fahrzeugsystems, **dadurch gekennzeichnet, dass** das Fahrzeugsystem bei einer Fahrt entlang einer Route auf einer gemäß einem der Ansprüche 1 bis 20 bereitgestellten digitalen Straßenkarte (14) simuliert wird und überprüft wird, ob mindestens eine vorbestimmte Anforderung, insbesondere Sicherheitsanforderung, an das Fahrzeugsystem bei der simulierten Fahrt eingehalten wird.

22. Verfahren nach Anspruch 21, **dadurch gekennzeichnet, dass** für bestimmte der Straßeneigenschaften eine automatische Anpassung oder Beschränkung der Menge der jeweiligen Ausprägungen oder des zulässigen Bereichs für die jeweiligen Ausprägungen erfolgt, insbesondere abhängig von Art oder Eigenschaften des zu testenden Fahrzeugsystems.

23. Verfahren nach einem der Ansprüche 21 oder 22, **dadurch gekennzeichnet, dass** das Fahrzeugsystem automatisch angepasst wird, insbesondere, dass Parameter einer Software des Fahrzeugsystems automatisch angepasst werden, wenn die Überprüfung ergibt, dass mindestens eine vorbestimmte Anforderung bei der simulierten Fahrt nicht eingehalten wird.

24. Computerprogramm, welches eingerichtet ist, ein Verfahren nach einem der vorangegangenen Ansprüche durchzuführen.

25. Maschinenlesbarer Datenträger mit einem Computerprogramm nach Anspruch 24.
